# FASCICULE DE BREVET EUROPEEN

(11) **EP 4 197 902 B1**
(45) Date de publication et mention de la délivrance du brevet: **21.02.2024**
(21) Numéro de dépôt: 22212428.1
(22) Date de dépôt: 09.12.2022
(51) Int. Cl.: B64C 1/18, B64D 43/00

(54) **AÉRONEF COMPRENANT AU MOINS UN MEUBLE SYSTÈME RELIÉ PAR AU MOINS UN SYSTÈME DE LIAISON À UN RAIL D' UN PLANCHER**
LUFTFAHRZEUG, DAS MINDESTENS EIN SYSTEMMÖBEL UMFASST, DAS DURCH MINDESTENS EIN VERBINDUNGSSYSTEM AN EINER SCHIENE EINES BODENS VERBUNDEN IST
AIRCRAFT COMPRISING AT LEAST ONE SYSTEM FURNITURE CONNECTED BY AT LEAST ONE SYSTEM CONNECTING TO A RAIL OF A FLOOR

(30) Priorité: 17.12.2021 FR 2113823
(43) Date de publication de la demande: 21.06.2023
(73) Titulaire: AIRBUS OPERATIONS (S.A.S.), 31060 Toulouse (FR)
(72) Inventeur: AGUERA, Damien, 31060 TOULOUSE (FR); CHALQI, Salim, 31060 TOULOUSE (FR); DE KERGOMMEAUX, Matthieu, 31060 Toulouse (FR); SUPAN, Gaspard, 31060 Toulouse (FR)
(74) Mandataire: Airbus-OPS SAS

(56) Documents cités:
- FR-A1- 3 000 031
- US-A1- 2015 291 281
- US-A1- 2016 304 186

## Description

La présente demande se rapporte à un aéronef comprenant au moins un meuble système relié par au moins un système de liaison à un rail d'un plancher.

FR 3 000 031 A1 concerne un module de soute avionique intégral. Le module comprend une structure intégrant à sa verticale un plancher de cabine qui referme la structure. L'installation d'une telle structure de soute avionique intégrale, en une seule opération, à l'intérieur d'une structure primaire de fuselage réduit considérablement le temps d'intégration sur la chaîne d'assemblage final de l'aéronef. US 2016/304186 A1 divulgue un dispositif d'aménagement d'une soute avionique en pointe-avant d'un aéronef. US 2015/291281 A1 concerne un aéronef comprenant un fuselage qui comporte une partie centrale de section transversale à géométrie constante qui comprend un plancher, caractérisé en ce que le plancher comprend deux portions latérales qui sont fixées respectivement à deux bords latéraux opposés du fuselage et qui encadrent une portion centrale à laquelle elles sont fixées, une des portions latérales de plancher étant fixée à la portion centrale de manière à autoriser un déplacement latéral relatif entre les deux portions en cas de modification de pression à l'intérieur du fuselage.

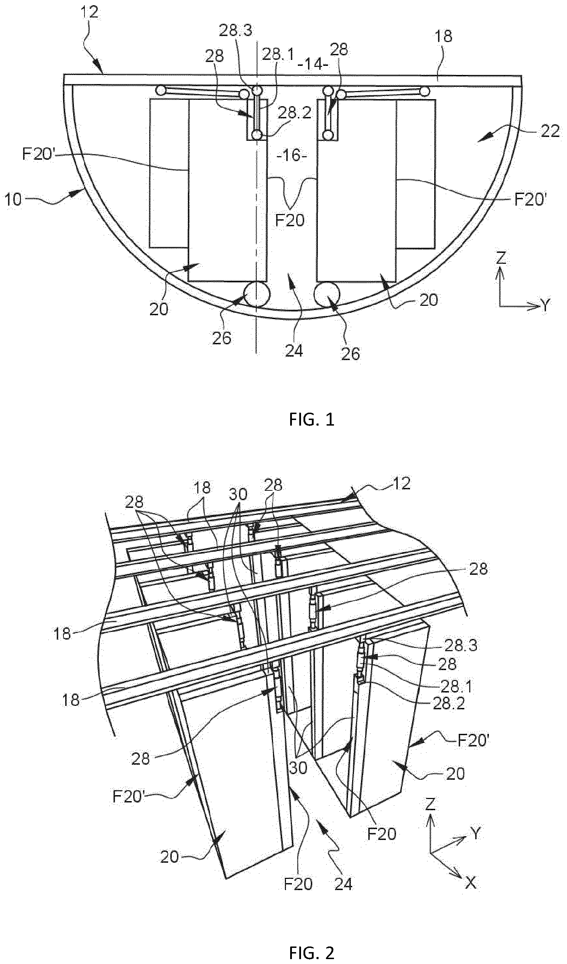

Selon un mode de réalisation visible sur les figures 1 et 2, un aéronef comprend un fuselage 10 ainsi qu'un plancher 12 scindant l'intérieur du fuselage 10 en une zone supérieure 14 et une zone inférieure 16. Selon une configuration, le plancher 12 comprend des poutres transversales 18 positionnées dans des plans perpendiculaires à l'axe longitudinal X de l'aéronef.

L'aéronef comprend plusieurs meubles systèmes 20 positionnés dans une soute avionique 22 située à l'avant de la zone inférieure d'une pointe avant, sous le poste de pilotage. Selon un agencement, les meubles systèmes 20 sont agencés selon deux rangées, de part et d'autre de l'axe longitudinal X, de manière à délimiter un couloir 24.

Chaque meuble système 20 est relié par au moins un système de liaison inférieur 26 à la structure du fuselage 10 et par au moins un système de liaison supérieur 28 à au moins une poutre transversale 18 du plancher 12. Chaque système de liaison supérieur 28 comprend une bielle 28.1 qui présente une première extrémité 28.2 reliée par une première articulation rotulée au meuble système 20 ainsi qu'une deuxième extrémité 28.3 reliée par une deuxième articulation rotulée à l'une des poutres transversales 18 du plancher 12.

Selon un mode de réalisation visible sur la figure 2, chaque meuble système 20 comprend une face avant F20 sensiblement verticale, parallèle à l'axe longitudinal X et orientée vers ledit axe longitudinal X, une face arrière F20' sensiblement verticale, parallèle à l'axe longitudinal X et opposée à la face avant F20 ainsi que des montants 30, verticaux, positionnés sur les faces avant et arrière F20, F20' et répartis sur la longueur du meuble système 20, des montants étant situés à chaque extrémité longitudinale des faces avant et arrière F20, F20'. Selon ce mode de réalisation, la première extrémité 28.2 de chaque bielle 28.1 est reliée à un montant 30 et la deuxième extrémité 28.3 est reliée à une poutre transversale 18 du plancher 12. Pour que les efforts soient correctement transmis, le montant 30, la bielle 28.1 et la poutre transversale 18 sont positionnés sensiblement dans le même plan transversal. Par conséquent, il est nécessaire de tenir compte de l'espacement entre les poutres transversales 18 lors de la conception d'un meuble système 20 afin que ses montants 30 soient correctement positionnés. Les poutres transversales 18 n'étant pas espacées de la même manière d'un modèle d'aéronef à l'autre, les meubles systèmes 20 ne peuvent pas avoir des dimensions standardisées et chaque meuble système 20 doit être conçu en fonction de l'aéronef dans lequel il doit être installé.

La présente invention vise à remédier à tout ou partie des inconvénients de l'art antérieur. L'invention a pour objet un aéronef comprenant :
- un fuselage qui présente un axe longitudinal et une structure,
- un plancher qui comporte des poutres transversales parallèles entre elles et positionnées dans des plans transversaux ainsi que des rails parallèles entre eux et à l'axe longitudinal,
- au moins un meuble système positionné sous le plancher et qui comporte une série de premiers montants verticaux, répartis selon une direction parallèle à l'axe longitudinal,
- au moins un système de liaison inférieur reliant le meuble système et la structure du fuselage,
- au moins un système de liaison supérieur reliant le meuble système et le plancher.

Selon l'invention, au moins un premier système de liaison supérieur relie au moins l'un des premiers montants et un rail du plancher.

Ainsi, les premiers montants du meuble système peuvent être positionnés indifféremment des positions des poutres transversales. Cette solution permet de simplifier la conception des meubles systèmes et de les standardiser.

Selon une autre caractéristique, le premier système de liaison supérieur comprend une bielle qui présente une première extrémité reliée par une première articulation au meuble système ainsi qu'une deuxième extrémité reliée par une deuxième articulation au rail, la première articulation présentant un premier axe de pivotement orienté selon une première direction sensiblement horizontale, la deuxième articulation présentant un deuxième axe de pivotement orienté selon une deuxième direction sensiblement horizontale et perpendiculaire à la première direction.

Selon une autre caractéristique, la première articulation comprend :
- une première cornière, solidaire d'un des premiers montants, qui présente au moins une première aile plaquée contre le premier montant et reliée à ce dernier par au moins une fixation ainsi qu'une deuxième aile positionnée approximativement dans un plan transversal,
- une chape solidaire de la bielle, qui présente deux branches entre lesquelles est positionnée la deuxième aile de la première cornière,
- le premier axe de pivotement de la première articulation traversant la deuxième aile de la première cornière et les branches de la chape.

Selon une autre caractéristique, la deuxième articulation comprend :
- une deuxième cornière, solidaire du rail, qui présente au moins une première aile plaquée contre le rail et reliée à ce dernier par au moins une fixation ainsi qu'une deuxième aile positionnée approximativement dans un plan longitudinal,
- une chape solidaire de la bielle, qui présente deux branches entre lesquelles est positionnée la deuxième aile de la deuxième cornière,
- le deuxième axe de pivotement de la deuxième articulation traversant la deuxième aile de la deuxième cornière et les branches de la chape.

Selon une autre caractéristique, les première et/ou deuxième articulations sont rotulées.

Selon une autre caractéristique, l'aéronef comprend une poutre longitudinale solidaire de la structure du fuselage, positionnée approximativement à l'aplomb des premiers montants du meuble système et présentant une semelle supérieure sur laquelle repose le meuble système ainsi qu'une âme. En complément, le système de liaison inférieur comprend une troisième cornière qui comporte une première aile plaquée contre l'un des premiers montants et reliée à ce dernier par au moins une fixation ainsi qu'une deuxième aile plaquée contre la semelle supérieure de la poutre longitudinale et reliée à cette dernière par au moins une fixation. Selon une autre caractéristique, le système de liaison inférieur comprend une quatrième cornière positionnée au droit de la troisième cornière et qui présente une première aile plaquée contre l'âme de la poutre longitudinale et reliée à cette dernière par au moins une fixation ainsi qu'une deuxième aile plaquée contre la semelle de la poutre longitudinale et reliée à cette dernière par au moins une fixation.

Selon une autre caractéristique, les deuxièmes ailes des troisième et quatrième cornières ainsi que la semelle de la poutre longitudinale sont reliées par les mêmes fixations.

Selon une autre caractéristique, le meuble système comprend au moins un premier renfort longitudinal inférieur reliant les premiers montants. En complément, les troisièmes cornières des différents premiers montants du meuble système et le premier renfort longitudinal inférieur ne forment qu'une unique et même pièce.

Selon une autre caractéristique, le meuble système comprend une plate-forme inférieure. En complément, le premier renfort longitudinal inférieur, les troisièmes cornières et la plate-forme inférieure ne forment qu'une unique et même pièce.

Selon une autre caractéristique, l'aéronef comprend au moins un deuxième système de liaison supérieur, configuré pour reprendre des efforts composés essentiellement d'au moins une composante longitudinale, relié à un rail ou à une poutre transversale du plancher.

D'autres caractéristiques et avantages ressortiront de la description de l'invention qui va suivre, description donnée à titre d'exemple uniquement, en regard des dessins annexés parmi lesquels :
- la figure 1 est une vue de face schématique d'une soute avionique illustrant un mode de réalisation de l'art antérieur,
- la figure 2 est une vue perspective schématique d'une partie d'une soute avionique illustrant un mode de réalisation de l'art antérieur,
- la figure 3 est une vue latérale d'un aéronef,
- la figure 4 est une coupe longitudinale d'une partie avant de l'aéronef visible sur la figure 3,
- la figure 5 est une vue en perspective de meubles systèmes illustrant un mode de réalisation de l'invention,
- la figure 6 est une vue depuis l'arrière d'un aéronef d'une soute avionique illustrant un mode de réalisation de l'invention,
- la figure 7 est une vue latérale de la soute avionique visible sur la figure 6,
- la figure 8 est une vue en perspective d'un système de liaison inférieur illustrant un premier mode de réalisation de l'invention,
- a figure 9 est une vue en perspective d'un système de liaison inférieur illustrant un deuxième mode de réalisation de l'invention,
- la figure 10 est une vue de dessus d'une partie d'une plate-forme inférieure d'un meuble système illustrant un mode de réalisation de l'invention,
- la figure 11 est une coupe selon la ligne XI-XI de la figure 10, et
- la figure 12 est une vue de face d'un système de liaison supérieur illustrant un mode de réalisation de l'invention.

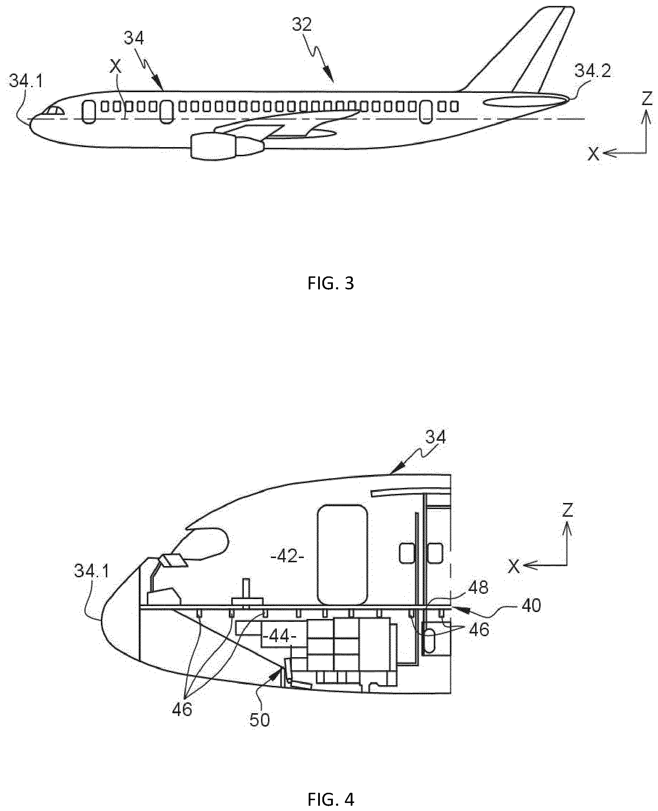

Comme illustré sur la figure 3, un aéronef 32 comprend un fuselage 34 qui s'étend d'une pointe avant 34.1 jusqu'à une pointe arrière 34.2.

Pour la suite de la description, un axe longitudinal X de l'aéronef 32 correspond à l'axe central horizontal, lorsque l'aéronef 32 est au sol, qui s'étend de la pointe avant 34.1 jusqu'à la pointe arrière 34.2 de l'aéronef 32. Une direction longitudinale est une direction parallèle à l'axe longitudinal X. Un plan longitudinal vertical est un plan vertical passant par l'axe longitudinal X. Un plan transversal est un plan perpendiculaire à l'axe longitudinal X.

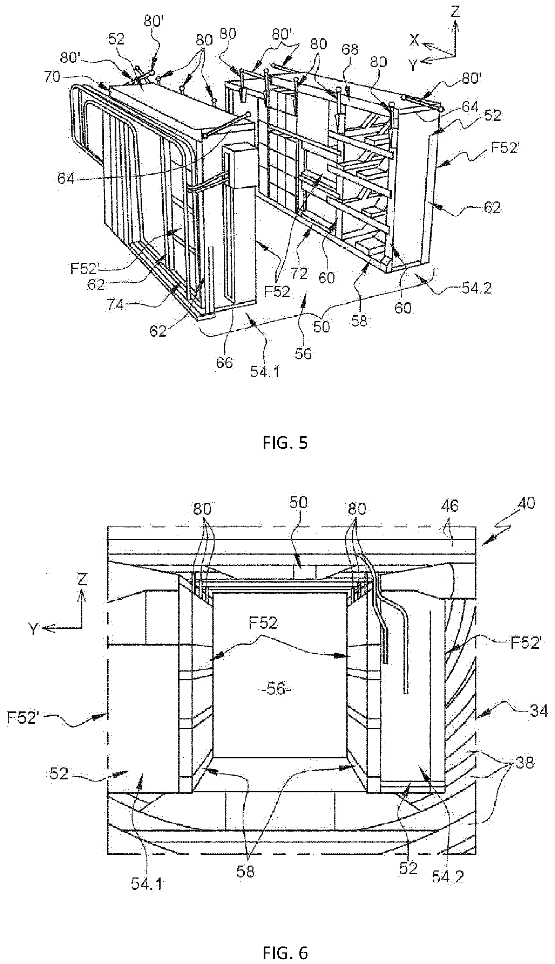

Le fuselage 34 comprend une structure comportant des renforts transversaux également appelés cadres 38 (visibles sur la figure 6), positionnés dans des plans transversaux ainsi que des renforts longitudinaux, appelés lisses, approximativement parallèles à l'axe longitudinal X.

Comme illustré sur la figure 4, l'aéronef 32 comprend un plancher 40 sensiblement horizontal, scindant l'intérieur du fuselage 34 en une zone supérieure 42 et une zone inférieure 44. Selon une configuration, le plancher 40 comprend des poutres transversales 46 parallèles entre elles et positionnées dans des plans transversaux ainsi que des rails 48 parallèles entre eux et à l'axe longitudinal X, positionnés sur les poutres transversales 46 et reliés à ces dernières. Chaque rail 48 est un profilé qui présente une section transversale en I, en J ou autres. Généralement, les rails 48 sont espacés entre eux d'un pas inférieur à celui prévu entre les poutres transversales 46. Ces rails sont notamment utilisés pour fixer les sièges de la cabine passagers.

La zone inférieure 44 comprend, à l'avant du fuselage, une soute avionique 50.

L'aéronef 32 comprend au moins un meuble système 52 (également appelé armoire) positionné dans la soute avionique 50.

Selon un agencement, l'aéronef 32 comprend plusieurs meubles systèmes 52 agencés selon deux rangées 54.1, 54.2 orientées parallèlement à l'axe longitudinal X de part et d'autre de ce dernier de manière à délimiter un couloir 56.

Sur le plan géométrique, chaque meuble système 52, approximativement parallélépipédique, présente entre autres une face avant F52 ainsi qu'une face arrière F52' sensiblement parallèle à la face avant F52. Selon l'agencement visible sur la figure 5, la face avant F52 des meubles systèmes 52 est orientée vers le couloir 56. Elle est largement dégagée pour permettre d'accéder à l'intérieur du meuble système. La face arrière F52' est orientée vers le fuselage 34.

Chaque meuble système 52 présente une première dimension appelée longueur (dimension prise dans un plan horizontal selon une première direction, parallèle à l'axe longitudinal X dans le cas présent), une deuxième dimension appelée largeur (dimension prise dans un plan horizontal selon une deuxième direction perpendiculaire à la première direction et à l'axe longitudinal X dans le cas présent) inférieure à la première dimension ainsi qu'une troisième dimension dite hauteur (dimension prise selon une direction verticale).

Chaque meuble système 52 comprend une plate-forme inférieure 58, une première série de premiers montants 60 verticaux positionnés au niveau de la face avant F52 ainsi qu'une deuxième série de deuxièmes montants 62 (visibles sur la figure 5) verticaux positionnés au niveau de la face arrière F52'. Chaque montant 60, 62 comprend une extrémité inférieure reliée à la plate-forme inférieure 58 ainsi qu'une extrémité supérieure.

Selon une configuration illustrée sur la figure 5, chaque meuble système 52 comprend des traverses supérieures 64 reliant l'extrémité supérieure de chaque premier montant 60 à l'extrémité supérieure d'un deuxième montant 62, des traverses inférieures 66 reliant l'extrémité inférieure de chaque premier montant 60 à l'extrémité inférieure d'un deuxième montant 62, au moins un premier renfort longitudinal supérieur 68 reliant les extrémités supérieures des premiers montants 60, au moins un deuxième renfort longitudinal supérieur 70 reliant les extrémités supérieures des deuxièmes montants 62, au moins un premier renfort longitudinal inférieur 72 reliant les extrémités inférieures des premiers montants 60 ainsi qu'au moins un deuxième renfort longitudinal inférieur 74 reliant les extrémités inférieures des deuxièmes montants 62. Ainsi, le meuble système 52 comprend plusieurs cadres verticaux positionnés dans des plans transversaux et comportant chacun un couple de premier et deuxième montants 60, 62 reliés par un couple de traverses supérieure et inférieure 64, 66, lesdits cadres transversaux étant reliés par des premiers et deuxièmes renforts longitudinaux supérieurs et inférieurs.

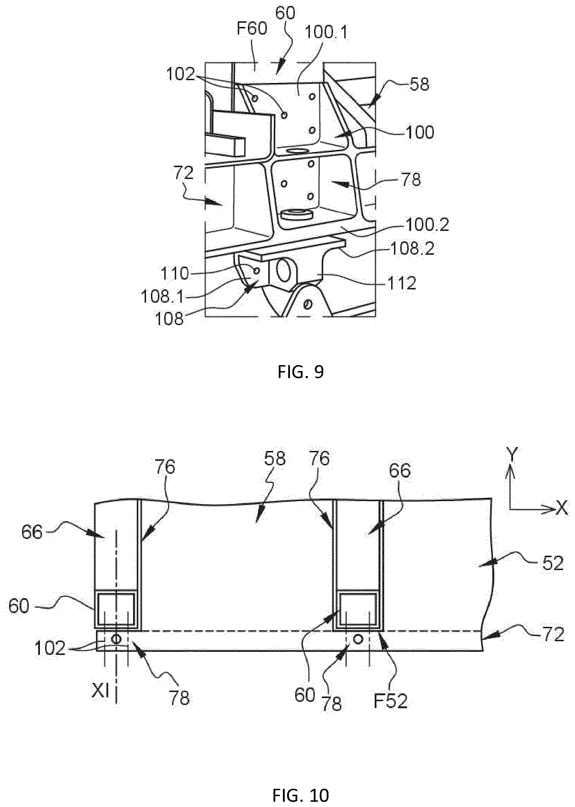

Le meuble système 52 peut comprendre des traverses intermédiaires reliant chacune un premier montant 60 et un deuxième montant 62 positionnées entre les extrémités supérieures et inférieures des premiers et deuxièmes montants 60, 62 ainsi que des renforts longitudinaux intermédiaires reliant deux à deux des premiers ou deuxièmes montants 60, 62. Selon une configuration visible sur la figure 10, la plate-forme inférieure 58 du meuble système 52 comprend, pour chaque cadre transversal, une découpe 76 dans laquelle est positionnée la partie inférieure du cadre transversal. Selon cette configuration, les premier et deuxième renforts longitudinaux inférieurs 72, 74 sont intégrés à la plate-forme inférieure 58 du meuble système 52.

Le meuble système 52 peut comprendre des faces latérales et/ou des cloisons reliant chacune des premier et deuxième montants 60, 62 positionnés dans un même plan transversal, une face supérieure reliant les premier et deuxième renforts longitudinaux supérieurs 68, 70 et s'étendant sur toute la longueur du meuble système 52 ainsi que des étagères.

Chacun des premiers et deuxièmes montants 60, 62 présente une section transversale carrée ou rectangulaire. Chaque premier montant 60 comprend une première face F60, les premières faces F60 des premiers montants 60 du meuble système 52 étant sensiblement coplanaires et formant la face avant F52 du meuble système.

Bien entendu, l'invention n'est pas limitée à ces modes de réalisation pour le meuble système 52. Quel que soit le mode de réalisation, le meuble système 52 comprend une série de premiers montants 60, verticaux et répartis selon une direction parallèle à l'axe longitudinal X.

L'aéronef comprend, pour chaque meuble système 52, au moins un système de liaison inférieur 78 reliant le meuble système 52 et la structure du fuselage 34 ainsi qu'au moins un système de liaison supérieur 80, 80' reliant le meuble système 52 et le plancher 40.

Selon une configuration, l'aéronef comprend des premiers systèmes de liaison supérieurs 80 configurés pour reprendre des efforts composés essentiellement d'une composante verticale et des deuxièmes systèmes de liaison supérieurs 80' configurés pour reprendre des efforts composés essentiellement d'au moins une composante longitudinale (parallèle à l'axe longitudinal X) et/ou transversale (perpendiculaire à l'axe longitudinal X).

Selon une caractéristique de l'invention, au moins un premier système de liaison supérieur 80 relie au moins l'un des premiers montants 60 et un rail 48 du plancher 40.

Selon un premier agencement, tous les premiers montants 60 sont reliés par un premier système de liaison supérieur 80 à un rail 48 du plancher 40. Selon un deuxième agencement, au moins un premier montant 60 est relié par un premier système de liaison supérieur 80 à un rail 48 du plancher 40 et au moins un premier montant 60 est relié par un autre système de liaison à une poutre transversale 46 du plancher 40.

Les rails 48 s'étendant sur au moins toute la longueur du meuble système 52, les premiers montants 60 peuvent être positionnés indifféremment des positions des poutres transversales 46. Cette solution permet de simplifier la conception des meubles systèmes 52 et de les standardiser.

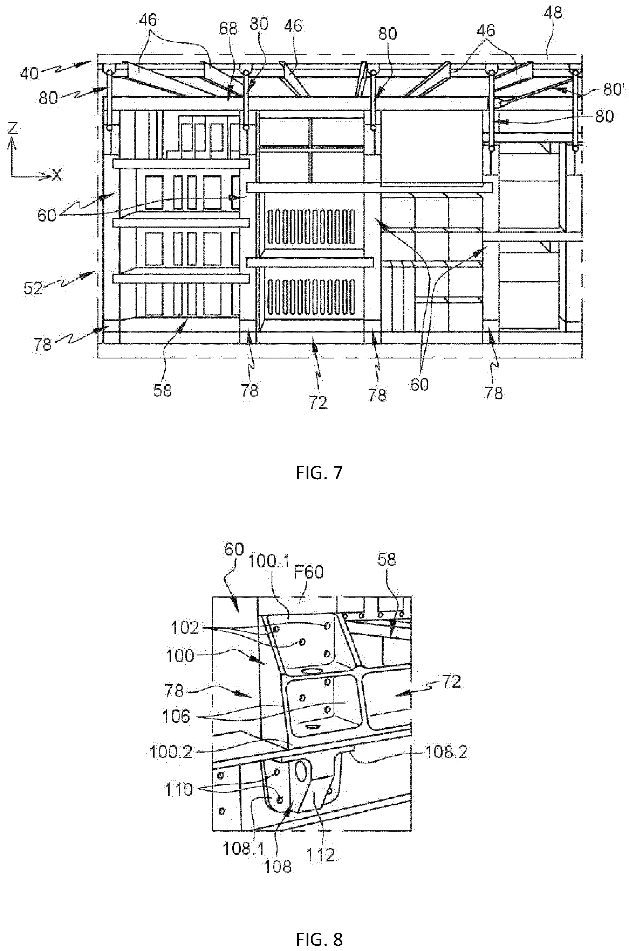

Les deuxièmes systèmes de liaison supérieurs 80' peuvent être reliés aux premiers montants 60. Toutefois, selon une configuration visible sur les figures 5 et 7, ils peuvent être reliés à un des premier et deuxième renforts longitudinaux supérieurs 68, 70 ou à toute autre partie du meuble système 52. Ces deuxièmes systèmes de liaison supérieurs 80' peuvent être reliés indifféremment à un rail 48 ou à une poutre transversale 46 du plancher 40.

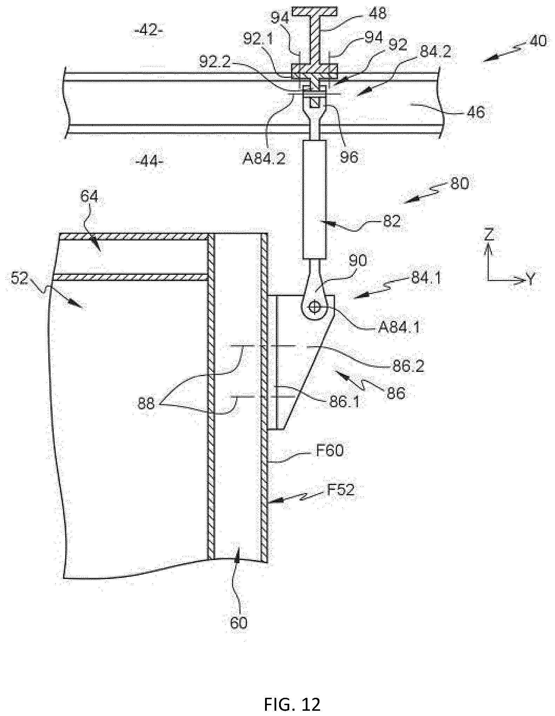

Selon un mode de réalisation visible sur la figure 12, chaque premier système de liaison supérieur 80 comprend une bielle 82 qui présente une première extrémité reliée par une première articulation 84.1 au meuble système 52 ainsi qu'une deuxième extrémité reliée par une deuxième articulation 84.2 au plancher 40.

Selon une autre caractéristique, pour chaque premier système de liaison supérieur 80, la première articulation 84.1 présente un premier axe de pivotement A84.1 orienté selon une première direction sensiblement horizontale et la deuxième articulation 84.2 présente un deuxième axe de pivotement A84.2 orienté selon une deuxième direction sensiblement horizontale et perpendiculaire à la première direction. Cette solution permet d'éviter que les bielles 82 des premiers systèmes de liaison supérieurs 80 ne soient sollicitées selon les directions longitudinale et transversale.

Selon un agencement illustré par la figure 12, le premier axe de pivotement A84.1 de la première articulation 84.1 est approximativement parallèle à l'axe longitudinal X et le deuxième axe de pivotement A84.2 de la deuxième articulation 84.2 est approximativement perpendiculaire à l'axe longitudinal X.

Les première et/ou deuxième articulations 84.1, 84.2 peuvent être rotulées.

Selon un mode de réalisation, la première articulation 84.1 comprend :
- une première cornière 86, solidaire d'un montant 60, qui présente au moins une première aile 86.1 plaquée contre la première face F60 du premier montant 60 et reliée à ce dernier par au moins une fixation 88 ainsi qu'une deuxième aile 86.2 positionnée approximativement dans un plan transversal,
- une chape 90, solidaire de la bielle 82, présentant deux branches entre lesquelles est positionnée la deuxième aile 86.2 de la première cornière 86,
- un premier axe de pivotement A84.1 traversant la deuxième aile 86.2 et les branches de la chape 90.

La deuxième articulation 84.2 comprend :
- une deuxième cornière 92, solidaire du rail 48, qui présente au moins une première aile 92.1 plaquée contre le rail 48 et reliée à ce dernier par au moins une fixation 94 ainsi qu'une deuxième aile 92.2 positionnée approximativement dans un plan longitudinal,
- une chape 96, solidaire de la bielle 82, présentant deux branches entre lesquelles est positionnée la deuxième aile 92.2 de la deuxième cornière 92,
- un deuxième axe de pivotement A84.2 traversant la deuxième aile 92.2 et les branches de la chape 96.

Bien entendu, l'invention n'est pas limitée à ces modes de réalisation pour les premières et deuxièmes articulations 84.1, 84.2.

Les systèmes de liaison inférieurs 78 reliant le meuble système 52 et la structure du fuselage 34 peuvent être identiques à ceux de l'art antérieur.

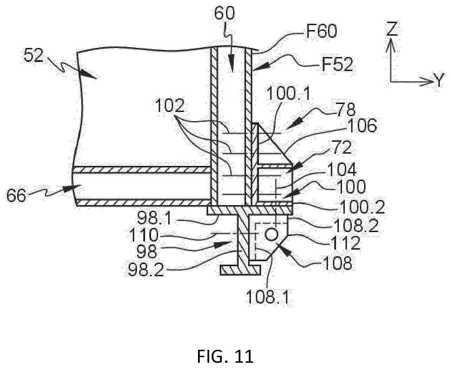

Au niveau de la face arrière F52', le meuble système 52 peut être directement relié aux cadres 38 de la structure du fuselage. Le meuble système 52 étant espacé des cadres 38 de la structure du fuselage à l'aplomb de sa face avant F52, la structure du fuselage 34 comprend une poutre longitudinale 98 (parallèle à l'axe longitudinal X) solidaire des cadres 38 et positionnée approximativement à l'aplomb des premiers montants 60 du meuble système 52. Selon une configuration visible sur la figure 11, la poutre longitudinale 98 présente une semelle supérieure 98.1 sur laquelle repose le meuble système 52, notamment ses premiers montants 60, ainsi qu'une âme 98.2.

Selon un mode de réalisation, l'aéronef comprend un système de liaison inférieur 78 pour chaque premier montant 60, qui comprend une troisième cornière 100 (visible sur les figures 8 à 11). Cette troisième cornière 100 comprend une première aile 100.1 plaquée contre la première face F60 du premier montant 60 et reliée à ce dernier par au moins une fixation 102 ainsi qu'une deuxième aile 100.2 plaquée contre la semelle supérieure 98.1 de la poutre longitudinale 98 et reliée à cette dernière par au moins une fixation 104. Pour renforcer ses caractéristiques mécaniques, la troisième cornière 100 présente au moins une nervure 106, notamment un réseau de nervures.

Pour améliorer la transmission des efforts entre chaque premier montant 60 et la poutre longitudinale 98, chaque système de liaison inférieur 78 positionné au droit d'un premier montant 60 comprend une quatrième cornière 108, positionnée au droit de la troisième cornière 100, qui présente une première aile 108.1 plaquée contre l'âme 98.2 de la poutre longitudinale 98 et reliée à cette dernière par au moins une fixation 110 ainsi qu'une deuxième aile 108.2 plaquée contre la semelle 98.1 de la poutre longitudinale 98, plus particulièrement contre sa face inférieure, et reliée à cette dernière par au moins une fixation. Selon un agencement, les deuxièmes ailes 100.2, 108.2 des troisième et quatrième cornières 100, 108 ainsi que la semelle 98.1 de la poutre longitudinale 98 sont reliées par les mêmes fixations 104.

Pour améliorer ses caractéristiques mécaniques, cette quatrième cornière 108 comprend au moins une nervure 112 reliant les première et deuxième ailes 108.1, 108.2.

Selon un mode de réalisation visible sur les figures 8 et 9, les troisièmes cornières 100, reliant les premiers montants 60 du meuble système 52 à la structure du fuselage 34, sont solidaires du premier renfort longitudinal inférieur 72. Selon une configuration, le premier renfort longitudinal inférieur 72 et les troisièmes cornières 100 ne forment qu'une unique et même pièce. Le premier renfort longitudinal inférieur 72, les troisièmes cornières 100 et la plate-forme inférieure 58 du meuble système 52 peuvent ne former qu'une unique et même pièce. Bien entendu, l'invention n'est pas limitée à ces modes de réalisation pour la plate-forme inférieure 58 et les systèmes de liaison inférieurs 78.

## Revendications

1. Aéronef comprenant :
- un fuselage (34) qui présente un axe longitudinal (X) et une structure,
- un plancher (40) qui comporte des poutres transversales (46) parallèles entre elles et positionnées dans des plans transversaux ainsi que des rails (48) parallèles entre eux et à l'axe longitudinal (X),
- au moins un meuble système (52) positionné sous le plancher (40) et qui comporte une série de premiers montants (60) verticaux, répartis selon une direction parallèle à l'axe longitudinal (X),
- au moins un système de liaison inférieur (78) reliant le meuble système (52) et la structure du fuselage (34),
- au moins un système de liaison supérieur (80) reliant le meuble système (52) et le plancher (40),
**caractérisé en ce qu'**au moins un premier système de liaison supérieur (80) relie au moins l'un des premiers montants (60) et un rail (48) du plancher (40).

2. Aéronef selon la revendication précédente, **caractérisé en ce que** le premier système de liaison supérieur (80) comprend une bielle (82) qui présente une première extrémité reliée par une première articulation (84.1) au meuble système (52) ainsi qu'une deuxième extrémité reliée par une deuxième articulation (84.2) au rail (48), la première articulation (84.1) présentant un premier axe de pivotement (A84.1) orienté selon une première direction sensiblement horizontale, la deuxième articulation (84.2) présentant un deuxième axe de pivotement (A84.2) orienté selon une deuxième direction sensiblement horizontale et perpendiculaire à la première direction.

3. Aéronef selon la revendication précédente, **caractérisé en ce que** la première articulation (84.1) comprend :
- une première cornière (86), solidaire d'un des premiers montants (60), qui présente au moins une première aile (86.1) plaquée contre le premier montant (60) et reliée à ce dernier par au moins une fixation (88) ainsi qu'une deuxième aile (86.2) positionnée approximativement dans un plan transversal,
- une chape (90), solidaire de la bielle (82), qui présente deux branches entre lesquelles est positionnée la deuxième aile (86.2) de la première cornière (86),
- le premier axe de pivotement (A84.1) de l'articulation (84.1) traversant la deuxième aile (86.2) de la première cornière (86) et les branches de la chape (90).

4. Aéronef selon l'une des revendications 2 à 3, **caractérisé en ce que** la deuxième articulation (84.2) comprend :
- une deuxième cornière (92), solidaire du rail (48), qui présente au moins une première aile (92.1) plaquée contre le rail (48) et reliée à ce dernier par au moins une fixation (94) ainsi qu'une deuxième aile (92.2) positionnée approximativement dans un plan longitudinal,
- une chape (96), solidaire de la bielle (82), qui présente deux branches entre lesquelles est positionnée la deuxième aile (92.2) de la deuxième cornière (92),
- le deuxième axe de pivotement (A84.2) de l'articulation (84.2) traversant la deuxième aile (92.2) de la deuxième cornière (92) et les branches de la chape (96).

5. Aéronef selon l'une des revendications 2 à 4, **caractérisé en ce que** les première et/ou deuxième articulations (84.1, 84.2) sont rotulées.

6. Aéronef selon l'une des revendications précédentes, **caractérisé en ce que** l'aéronef comprend une poutre longitudinale (98) solidaire de la structure du fuselage (34), positionnée approximativement à l'aplomb des premiers montants (60) du meuble système (52) et présentant une semelle supérieure (98.1) sur laquelle repose le meuble système (52) ainsi qu'une âme (98.2) et **en ce que** le système de liaison inférieur (78) comprend une troisième cornière (100) qui comporte une première aile (100.1) plaquée contre l'un des premiers montants (60) et reliée à ce dernier par au moins une fixation (102) ainsi qu'une deuxième aile (100.2) plaquée contre la semelle supérieure (98.1) de la poutre longitudinale (98) et reliée à cette dernière par au moins une fixation (104).

7. Aéronef selon la revendication précédente, **caractérisé en ce que** le système de liaison inférieur (78) comprend une quatrième cornière (108) positionnée au droit de la troisième cornière et qui présente une première aile (108.1) plaquée contre l'âme (98.2) de la poutre longitudinale (98) et reliée à cette dernière par au moins une fixation (110) ainsi qu'une deuxième aile (108.2) plaquée contre la semelle (98.1) de la poutre longitudinale (98) et reliée à cette dernière par au moins une fixation.

8. Aéronef selon la revendication précédente, **caractérisé en ce que** les deuxièmes ailes (100.2, 108.2) des troisième et quatrième cornières (100, 108) ainsi que la semelle (98.1) de la poutre longitudinale (98) sont reliées par les mêmes fixations (104).

9. Aéronef selon l'une des revendications 6 à 8, **caractérisé en ce que** le meuble système (52) comprend au moins un premier renfort longitudinal inférieur (72) reliant les premiers montants (60) et **en ce que** les troisièmes cornières (100) des différents premiers montants (60) du meuble système (52) et le premier renfort longitudinal inférieur (72) ne forment qu'une unique et même pièce.

10. Aéronef selon la revendication précédente, **caractérisé en ce que** le meuble système (52) comprend une plate-forme inférieure (58) et **en ce que** le premier renfort longitudinal inférieur (72), les troisièmes cornières (100) et la plate-forme inférieure (58) ne forment qu'une unique et même pièce.

11. Aéronef selon l'une des revendications précédentes, **caractérisé en ce que** l'aéronef comprend au moins un deuxième système de liaison supérieur (80'), configuré pour reprendre des efforts composés essentiellement d'au moins une composante longitudinale, relié à un rail (48) ou à une poutre transversale (46) du plancher (40).

## Patentansprüche

1. Luftfahrzeug, umfassend:
- einen Rumpf (34), welcher eine Längsachse (X) und eine Struktur aufweist,
- einen Boden (40), welcher zueinander parallele und in Querebenen positionierte Querträger (46) sowie zueinander und zur Längsachse (X) parallele Schienen (48) umfasst,
- mindestens ein Systemmöbel (52), das unter dem Boden (40) positioniert ist und das eine Reihe von vertikalen ersten Pfosten (60) umfasst, die entlang einer zur Längsachse (X) parallelen Richtung verteilt sind,
- mindestens ein unteres Verbindungssystem (78), welches das Systemmöbel (52) und die Struktur des Rumpfes (34) verbindet,
- mindestens ein oberes Verbindungssystem (80), welches das Systemmöbel (52) und den Boden (40) verbindet,
**dadurch gekennzeichnet, dass** mindestens ein erstes oberes Verbindungssystem (80) mindestens einen der ersten Pfosten (60) und eine Schiene (48) des Bodens (40) verbindet.

2. Luftfahrzeug nach dem vorhergehenden Anspruch, **dadurch gekennzeichnet, dass** das erste obere Verbindungssystem (80) eine Schubstange (82) umfasst, die ein erstes Ende, das durch ein erstes Gelenk (84.1) mit dem Systemmöbel (52) verbunden ist, sowie ein zweites Ende, das durch ein zweites Gelenk (84.2) mit der Schiene (48) verbunden ist, aufweist, wobei das erste Gelenk (84.1) eine erste Schwenkachse (A84.1) aufweist, die in einer im Wesentlichen horizontalen ersten Richtung ausgerichtet ist, wobei das zweite Gelenk (84.2) eine zweite Schwenkachse (A84.2) aufweist, die in einer im Wesentlichen horizontalen und zur ersten Richtung senkrechten zweiten Richtung ausgerichtet ist.

3. Luftfahrzeug nach dem vorhergehenden Anspruch, **dadurch gekennzeichnet, dass** das erste Gelenk (84.1) umfasst:
- ein mit einem der ersten Pfosten (60) fest verbundenes erstes Winkelstück (86), das mindestens einen ersten Schenkel (86.1), der an dem ersten Pfosten (60) anliegt und mit diesem Letzteren durch mindestens eine Befestigung (88) verbunden ist, sowie einen zweiten Schenkel (86.2), der ungefähr in einer Querebene positioniert ist, aufweist,
- ein mit der Schubstange (82) fest verbundenes Gabelstück (90), das zwei Arme aufweist, zwischen denen der zweite Schenkel (86.2) des ersten Winkelstücks (86) positioniert ist,
- wobei die erste Schwenkachse (A84.1) des Gelenks (84.1) den zweiten Schenkel (86.2) des ersten Winkelstücks (86) und die Arme des Gabelstücks (90) durchquert.

4. Luftfahrzeug nach einem der Ansprüche 2 bis 3, **dadurch gekennzeichnet, dass** das zweite Gelenk (84.2) umfasst:
- ein mit der Schiene (48) fest verbundenes zweites Winkelstück (92), das mindestens einen ersten Schenkel (92.1), der an der Schiene (48) anliegt und mit dieser Letzteren durch mindestens eine Befestigung (94) verbunden ist, sowie einen zweiten Schenkel (92.2), der ungefähr in einer Längsebene positioniert ist, aufweist,
- ein mit der Schubstange (82) fest verbundenes Gabelstück (96), das zwei Arme aufweist, zwischen denen der zweite Schenkel (92.2) des zweiten Winkelstücks (92) positioniert ist,
- wobei die zweite Schwenkachse (A84.2) des Gelenks (84.2) den zweiten Schenkel (92.2) des zweiten Winkelstücks (92) und die Arme des Gabelstücks (96) durchquert.

5. Luftfahrzeug nach einem der Ansprüche 2 bis 4, **dadurch gekennzeichnet, dass** das erste und/oder das zweite Gelenk (84.1, 84.2) Kugelgelenke sind.

6. Luftfahrzeug nach einem der vorhergehenden Ansprüche, **dadurch gekennzeichnet, dass** das Luftfahrzeug einen mit der Struktur des Rumpfes (34) fest verbundenen Längsträger (98) umfasst, der ungefähr senkrecht unter den ersten Pfosten (60) des Systemmöbels (52) positioniert ist und einen oberen Flansch (98.1), auf welchem das Systemmöbel (52) ruht, sowie einen Steg (98.2) aufweist, und dadurch, dass das untere Verbindungssystem (78) ein drittes Winkelstück (100) umfasst, das einen ersten Schenkel (100.1), der an einem der ersten Pfosten (60) anliegt und mit diesem Letzteren durch mindestens eine Befestigung (102) verbunden ist, sowie einen zweiten Schenkel (100.2), der an dem oberen Flansch (98.1) des Längsträgers (98) anliegt und mit diesem Letzteren durch mindestens eine Befestigung (104) verbunden ist, umfasst.

7. Luftfahrzeug nach dem vorhergehenden Anspruch, **dadurch gekennzeichnet, dass** das untere Verbindungssystem (78) ein viertes Winkelstück (108) umfasst, das gegenüber dem dritten Winkelstück positioniert ist und das einen ersten Schenkel (108.1), der am Steg (98.2) des Längsträgers (98) anliegt und mit diesem Letzteren durch mindestens eine Befestigung (110) verbunden ist, sowie einen zweiten Schenkel (108.2), der am Flansch (98.1) des Längsträgers (98) anliegt und mit diesem Letzteren durch mindestens eine Befestigung verbunden ist, aufweist.

8. Luftfahrzeug nach dem vorhergehenden Anspruch, **dadurch gekennzeichnet, dass** die zweiten Schenkel (100.2, 108.2) des dritten und vierten Winkelstücks (100, 108) sowie der Flansch (98.1) des Längsträgers (98) durch dieselben Befestigungen (104) verbunden sind.

9. Luftfahrzeug nach einem der Ansprüche 6 bis 8, **dadurch gekennzeichnet, dass** das Systemmöbel (52) mindestens eine erste untere Längsverstärkung (72) umfasst, welche die ersten Pfosten (60) verbindet, und dadurch, dass die dritten Winkelstücke (100) der verschiedenen ersten Pfosten (60) des Systemmöbels (52) und die erste untere Längsverstärkung (72) nur ein einziges Stück bilden.

10. Luftfahrzeug nach dem vorhergehenden Anspruch, **dadurch gekennzeichnet, dass** das Systemmöbel (52) eine untere Plattform (58) umfasst, und dadurch, dass die erste untere Längsverstärkung (72), die dritten Winkelstücke (100) und die untere Plattform (58) nur ein einziges Stück bilden.

11. Luftfahrzeug nach einem der vorhergehenden Ansprüche, **dadurch gekennzeichnet, dass** das Luftfahrzeug mindestens ein zweites oberes Verbindungssystem (80') umfasst, das dafür ausgelegt ist, Kräfte aufzunehmen, die im Wesentlichen aus mindestens einer Längskomponente bestehen, und das mit einer Schiene (48) oder mit einem Querträger (46) des Bodens (40) verbunden ist.

## Claims

1. Aircraft comprising:
- a fuselage (34) which has a longitudinal axis (X) and a structure,
- a floor (40) which comprises crossbeams (46) which are parallel to one another and positioned in transverse planes, and rails (48) which are parallel to one another and to the longitudinal axis (X),
- at least one system rack (52) positioned under the floor (40) and which comprises a series of vertical first uprights (60), distributed in a direction parallel to the longitudinal axis (X),
- at least a lower connecting system (78) connecting the system rack (52) and the structure of the fuselage (34),
- at least an upper connecting system (80) connecting the system rack (52) and the floor (40),
**characterized in that** at least a first upper connecting system (80) connects at least one of the first uprights (60) and a rail (48) of the floor (40).

2. Aircraft according to the preceding claim, **characterized in that** the first upper connecting system (80) comprises a connecting rod (82) which has a first end connected by a first articulation (84.1) to the system rack (52) and a second end connected by a second articulation (84.2) to the rail (48), the first articulation (84.1) having a first pivot axis (A84.1) oriented in a substantially horizontal first direction, the second articulation (84.2) having a second pivot axis (A84.2) oriented in a substantially horizontal second direction perpendicular to the first direction.

3. Aircraft according to the preceding claim, **characterized in that** the first articulation (84.1) comprises:
- a first bracket (86), secured to one of the first uprights (60) and which has at least a first flange (86.1) pressed against the first upright (60) and connected thereto by at least one fixing (88), and a second flange (86.2) positioned approximately in a transverse plane,
- a yoke (90), secured to the connecting rod (82) and which has two branches between which the second flange (86.2) of the first bracket (86) is positioned,
- the first pivot axis (A84.1) of the articulation (84.1) passing through the second flange (86.2) of the first bracket (86) and the branches of the yoke (90) .

4. Aircraft according to one of Claims 2 and 3, **characterized in that** the second articulation (84.2) comprises:
- a second bracket (92), secured to the rail (48) and which has at least a first flange (92.1) pressed against the rail (48) and connected thereto by at least one fixing (94), and a second flange (92.2) positioned approximately in a longitudinal plane,
- a yoke (96), secured to the connecting rod (82) and which has two branches between which the second flange (92.2) of the second bracket (92) is positioned,
- the second pivot axis (A84.2) of the articulation (84.2) passing through the second flange (92.2) of the second bracket (92) and the branches of the yoke (96) .

5. Aircraft according to one of Claims 2 to 4, **characterized in that** the first and/or second articulations (84.1, 84.2) are ball-jointed.

6. Aircraft according to one of the preceding claims, **characterized in that** the aircraft comprises a longitudinal beam (98) secured to the structure of the fuselage (34) and positioned approximately in vertical alignment with the first uprights (60) of the system rack (52) and having an upper sole (98.1) on which the system rack (52) rests as well as a web (98.2), and **in that** the lower connecting system (78) comprises a third bracket (100) which comprises a first flange (100.1) pressed against one of the first uprights (60) and connected thereto by at least one fixing (102), as well as a second flange (100.2) pressed against the upper sole (98.1) of the longitudinal beam (98) and connected thereto by at least one fixing (104).

7. Aircraft according to the preceding claim, **characterized in that** the lower connecting system (78) comprises a fourth bracket (108) positioned in line with the third bracket and which has a first flange (108.1) pressed against the web (98.2) of the longitudinal beam (98) and connected thereto by at least one fixing (110), as well as a second flange (108.2) pressed against the sole (98.1) of the longitudinal beam (98) and connected thereto by at least one fixing.

8. Aircraft according to the preceding claim, **characterized in that** the second flanges (100.2, 108.2) of the third and fourth brackets (100, 108) as well as the sole (98.1) of the longitudinal beam (98) are connected by the same fixings (104).

9. Aircraft according to one of Claims 6 to 8, **characterized in that** the system rack (52) comprises at least a first lower longitudinal reinforcement (72) connecting the first uprights (60) and **in that** the third brackets (100) of the various first uprights (60) of the system rack (52) and the first lower longitudinal reinforcement (72) form the one same single component part.

10. Aircraft according to the preceding claim, **characterized in that** the system rack (52) comprises a lower platform (58) and **in that** the first lower longitudinal reinforcement (72), the third brackets (100) and the lower platform (58) form the one same single component part.

11. Aircraft according to one of the preceding claims, **characterized in that** the aircraft comprises at least a second upper connecting system (80'), configured to react loads essentially made up of at least one longitudinal component and which is connected to a rail (48) or to a crossbeam (46) of the floor (40).
